# FASCICULE DE BREVET EUROPEEN

(11) **EP 2 943 548 B1**
(45) Date de publication et mention de la délivrance du brevet: **07.12.2022**
(21) Numéro de dépôt: 14703124.9
(22) Date de dépôt: 10.01.2014
(51) Int. Cl.: C09J 103/02

(54) **UTILISATION D'UNE COMBINAISON AMIDON DE LÉGUMINEUSE / AMIDON DE TUBERCULE POUR DIMINUER LA TENEUR EN BORE DANS UNE COMPOSITION ADHÉSIVE, ET COMPOSITIONS ADHÉSIVES COMPORTANT UNE TELLE COMBINAISON**
VERWENDUNG EINER KOMBINATION AUS LEGUMINÖSER STÄRKE/KNOLLENSTÄRKE ZUR REDUZIERUNG DES BORGEHALTS IN EINER KLEBSTOFFZUSAMMENSETZUNG UND KLEBSTOFFZUSAMMENSETZUNGEN MIT DIESER KOMBINATION
USE OF A LEGUMINOUS STARCH / TUBER STARCH COMBINATION TO REDUCE THE BORON CONTENT IN AN ADHESIVE COMPOSITION, AND ADHESIVE COMPOSITIONS COMPRISING SUCH A COMBINATION

(30) Priorité: 14.01.2013 FR 1350287; 13.09.2013 FR 1358822
(43) Date de publication de la demande: 18.11.2015
(73) Titulaire: Roquette Frères, 62136 Lestrem (FR)
(72) Inventeur: BOUXIN, Christian, F-59274 Marquillies (FR); OBIN, Sylvie, F-27930 Le Boulay Morin (FR); GOMBERT, Hervé, F-62530 Servins (FR)
(74) Mandataire: Plasseraud IP
(86) Numéro de dépôt international: PCT/FR2014/050036
(87) Numéro de publication internationale: WO 2014/108643

(56) Documents cités:
- EP-A1- 1 352 939
- EP-A1- 1 688 471
- EP-A2- 0 229 741
- WO-A1-98/50478
- FR-A1- 2 846 662

## Description

La présente invention concerne l'utilisation d'une combinaison amidon de pois / fécule de pomme de terre pour diminuer et/ou supprimer la teneur en composés porteurs de bore d'une composition adhésive et/ou comme adjuvant de collage dans une composition adhésive pour carton ondulé et/ou pour préparer une composition adhésive exempte de composés porteurs de bore. Elle vise également les compositions adhésives comportant une telle combinaison.

La présente invention concerne plus particulièrement des compositions adhésives pour carton ondulé, et leur utilisation dans l'assemblage du carton ondulé.

### ART ANTERIEUR

L'utilisation de colles naturelles d'amidon trouve son origine dans l'Egypte ancienne, où l'amidon, extrait du blé principalement, était employé pour l'encollage des feuilles de Papyrus.

Ces colles naturelles sont très simples de confection : il s'agit d'un simple mélange d'amidon et d'eau, et elles sont aujourd'hui encore largement utilisées dans l'industrie, et en particulier pour l'assemblage du carton ondulé.

Le domaine du carton ondulé représente ainsi aujourd'hui la deuxième application industrielle mondiale non-alimentaire de l'amidon. Ces cartons sont commercialisés sous forme de rouleaux, de plaques, mais principalement sous forme transformée, c'est-à-dire sous la forme de produits d'emballage.

Les colles pour carton ondulé sont classiquement obtenues selon le procédé dit « STEIN-HALL » (brevet français FR 813.389), mais d'autre procédés existent tels que le procédé dit « MINOCAR » (brevet européen EP 0 038 627), le procédé PRISTIM^{®} (brevet européen EP 0 229 741, au nom de la Demanderesse), ou le procédé dit « NO-CARRIER » (brevet américain US 3,355,307).

L'amidon est souvent retrouvé en deux parties dans ces colles. La partie primaire comprend un amidon solubilisé (gélatinisé), et la partie secondaire comprend un amidon sous forme granulaire. L'amidon granulaire est la composante active de la colle, tandis que l'amidon primaire joue essentiellement le rôle de support, pour le maintien en suspension de l'amidon granulaire. Le carton est assemblé comme suit : la colle est appliquée sur les sommets des cannelures d'un papier cannelé, qui est ensuite recouvert par un papier de couverture et l'ensemble est chauffé. Sous l'effet de la température, l'amidon granulaire gonfle et gélatinisé. Le gélifiant ainsi obtenu permet un collage rapide, nécessaire pour une production industrielle satisfaisante du carton ondulé.

Bien sûr, ces compositions ont évolué au cours du temps, et en plus des composés classiques que sont l'amidon et l'eau, on y retrouve des additifs divers, dont les plus importants sont la soude caustique et le borax.

Le borax en particulier est utilisé comme additif multifonctionnel depuis plus d'un siècle. Ainsi, le brevet FR 813.389 (de 1936) précité, décrit son utilisation ainsi que ses effets dans les compositions de colle pour carton ondulé.

En effet, les composés contenant du bore réagissent avec l'amidon soluble, et permettent la réticulation de l'amidon en partie primaire d'une part, et en partie secondaire d'autre part, lors de l'éclatement de ce dernier au moment de la chauffe. Le borax réagit en plus avec la soude caustique généralement introduite en partie primaire, pour former le métaborate de sodium.

Cette réactivité particulière des composés porteurs de bore confère aux compositions de colle de multiples propriétés qui sont indispensables à l'obtention de bonnes performances de collage.

En effet, aujourd'hui encore, on utilise de tels composés comme additifs multifonctionnels. A titre d'exemples on peut citer les demandes de brevet WO2011/160049 (2010) et US2010/032092 (2008), sur des solutions pour améliorer les performances de collage dans l'assemblage du carton ondulé. Ces solutions reposent sur l'élaboration de formulations complexes, faisant intervenir divers additifs, et le borax est systématiquement présent.

Son utilisation est très ancrée dans les pratiques, et il n'a jamais été question de supprimer le borax dans les compositions adhésives, qui est un adjuvant particulièrement efficace et dont l'utilisation industrielle est parfaitement maîtrisée par les cartonniers.

Pourtant, il existe clairement un besoin en ce sens, puisque le borax fait l'objet d'une réglementation de plus en plus stricte, qui n'est pas sans relation avec d'importants problèmes pour la santé des manipulateurs. Plusieurs composés porteurs de bore, utilisés en cartonnerie, sont ainsi classés Cancérogènes, Mutagènes et toxiques pour la Reproduction (CMR) en Europe (Règlement (CE) No. 1272/2008 du Parlement européen et du Conseil du 16 décembre 2008 relatif à la classification, à l'étiquetage et à l'emballage des substances et des mélanges). Ces composés ont par ailleurs été introduits récemment sur la liste des candidats aux substances classées « extrêmement préoccupantes» selon la réglementation REACH (http://echa.europa.eu/documents/10162/13583/pr_10_12_candidate_list_20100618_ fr.pdf), ce qui pourrait entraîner des obligations légales particulièrement lourdes pour les industriels qui en manipulent.

Dans cette optique, il est vrai que certaines solutions ont été proposées, qui s'intéressent à faire varier la nature et/ou la forme des composés porteurs de bore, afin d'essayer de sortir du cadre de ces réglementations. On peut, par exemple, citer les borax formulés sous forme liquide, comme alternatives au borax pulvérulent, qui visent à prévenir les expositions aux particules de borax aéroportées, comme par exemple le Rhebor^{®} (Lubrizol), le FullBor^{®} (H.B. Fuller), le C^{∗}GUM^{®} (Cargill). D'autres alternatives proposées sont les borates sous forme complexée, par exemple à des polyols.

Cependant, ces solutions manquent de pertinence pour des applications sur le long terme. Le caractère toxique et le paysage réglementaire relatif à ces produits ne sont pas encore bien définis, et ces solutions ne répondent pas aux problèmes d'image que peut poser l'utilisation de composés porteurs de bore de manière générale ; si bien que les fabricants de carton ondulé souhaitent aujourd'hui la suppression pure et simple de ces produits, au profit de solutions dites « vertes », sans danger pour la santé des manipulateurs et des consommateurs. Ceci est d'autant plus préoccupant qu'en France, par exemple, 80% des emballages de carton ondulé sont destinés à l'agroalimentaire et aux biens de consommation.

En ce sens, d'autres adjuvants ne contenant pas de bore ont été proposés en remplacement du borax, comme les produits à base d'aluminate de sodium ou de tannins.

Cependant, ces développements ne constituent que des solutions partielles aux différents problèmes soulevés par les fabricants de carton ondulé. La substitution du borax par d'autres composés présente en effet le désavantage de nécessiter des ajustements complexes de formulation des colles et de conduite machine, voire même des modifications des installations. Ces solutions ne permettent pas de s'affranchir du problème du coût engendré par leur mise en œuvre.

Par ailleurs, certains de ces produits sont mal connus et pourraient s'avérer présenter des inconvénients équivalents, voire pires que ceux rencontrés dans l'utilisation du borax, comme c'est le cas justement pour l'aluminate de sodium, mis en cause dans la maladie d'Alzheimer, ou les tannins, qui peuvent causer des maux de tête.

L'addition de tannins présente par ailleurs l'inconvénient de la coloration de la colle qui devient visible à travers certains papiers blancs et complique également le nettoyage des bacs de colle et de la machine.

D'une manière générale, les industriels n'ont pas encore réussi à se passer du borax. Les solutions proposées sont peu nombreuses et peu avantageuses, si bien que l'homme du métier continue de leur préférer le borax dont il a acquis la maîtrise parfaite au fil du temps.

Il existe donc une première nécessité à développer des compositions adhésives qui satisfassent toutes les exigences exprimées par les fabricants de carton ondulé, en termes de sécurité des manipulateurs, d'image, de coût, qui soient faciles d'accès en termes d'approvisionnement, et qui répondent à l'exigence de performances de collage égales, et de préférence meilleures, comparativement aux compositions actuelles, contenant du borax.

De manière tout à fait surprenante, la Demanderesse a trouvé la solution aux problèmes susmentionnés non pas dans la découverte de nouveaux additifs ou dans la mise au point de formulations complexes, mais en s'intéressant aux composés de base qui composent les colles, i.e. les amidons.

La Demanderesse a en effet identifié une combinaison d'amidons particulière, qui permet de diminuer et même de s'affranchir de l'utilisation du borax dans les compositions adhésives pour carton ondulé. Une telle combinaison a notamment été décrite dans la demande EP 1 688 471, en association avec des composés porteurs de bore.

La Demanderesse a mis au point des compositions adhésives comprenant une combinaison amidon de légumineuse / amidon de tubercule, qui permettent non seulement de se passer du borax, mais également, pour des ratios d'amidon particuliers, d'obtenir de meilleures performances de collage, comparativement aux mêmes compositions comportant du borax.

Ces résultats sont particulièrement surprenants, puisque cela signifie que dans ces compositions, le borax ne joue pas son rôle d'adjuvant, comme c'est normalement le cas dans les compositions adhésives. En effet, pour les compositions ne comportant pas une telle combinaison, le retrait du borax entraîne systématiquement une chute des performances de collage.

Personne n'avait pu imaginer auparavant que la solution reposait sur un choix judicieux des composés de base des colles que sont les amidons.

Le concept même sur lequel repose cette solution n'est à aucun moment évoqué dans l'art antérieur, puisque l'homme du métier, de par ses connaissances générales, pensait que le retrait du borax se faisait au détriment des performances de collage. Aucun document ne décrit que le fait de choisir un ou plusieurs amidons particuliers permet de s'affranchir de l'utilisation de composés porteurs de bore, tout en obtenant des performances de collage égales, et parfois même améliorées.

A fortiori, aucun document de l'art antérieur ne divulgue que cette combinaison est une combinaison amidon de légumineuse / amidon de tubercule, en particulier une combinaison amidon de pois / fécule de pomme de terre.

Il a également été observé que la combinaison selon l'invention permet de jouer le rôle d'adjuvant de collage, en lieu et place du borax et de l'aluminate de sodium classiquement utilisés à cette fin, lorsqu'elle est utilisée en partie secondaire dans une composition adhésive pour carton ondulé. Elle permet non seulement de se passer de ces adjuvants de collage conventionnels, mais également d'améliorer les performances de collage.

### BUTS DE L'INVENTION

Ainsi la présente invention a pour objectif de résoudre le problème technique consistant à diminuer la teneur en composés porteurs de bore, idéalement à les supprimer, des compositions adhésives, en particulier celles destinées à la fabrication du carton ondulé.

En particulier, la présente invention a pour objectif de résoudre le problème technique consistant à identifier un amidon ou une combinaison d'amidons particuliers qui conduit à l'obtention d'une composition adhésive au moins aussi performante que la même composition adhésive contenant du borax, préférentiellement à l'obtention d'une composition adhésive plus performante encore que la même composition adhésive contenant du borax.

En outre, la présente invention a pour objectif de proposer un adjuvant de collage en remplacement des adjuvants de collage conventionnels, tels que le borax et l'aluminate de sodium, qui soit au moins aussi performant, voire plus performant, que ces derniers.

L'invention a pour objectif de répondre aux problèmes susmentionnés en fournissant des compositions adhésives faciles à préparer et à mettre en œuvre, d'un coût raisonnable, faisant appel à des matériaux bio-sourcés, sûrs du point de vue de la santé des manipulateurs et des consommateurs.

### DESCRIPTION DE L'INVENTION

La Demanderesse a ainsi réussi à identifier la combinaison amidon de légumineuse / amidon de tubercule pour une utilisation dans des compositions adhésives pauvres en bore, voire sans bore, qui permet d'obtenir des performances de collage égales et mêmes supérieures à celles de compositions adhésives contenant du bore en plus grande quantité.

En effet, comme le montre l'Exemple 2, pour des compositions ne comprenant pas une telle combinaison, le retrait du borax entraîne systématiquement et logiquement une chute des performances de collage.

Le phénomène opposé se produit avec la combinaison selon l'invention.

Comme montré dans l'Exemple 2, la Demanderesse a identifié en particulier des ratios amidon de légumineuse / amidon de tubercule pour lesquels il est possible d'augmenter les performances de collage de manière significative, comparativement à la même composition adhésive contenant du borax.

De manière synthétique, ces résultats sont donc à l'opposé de ce à quoi l'homme du métier se serait attendu, et conduisent à une remise en cause manifeste du caractère jusqu'alors indispensable du borax ou de substituants du borax pour obtenir de bonnes performances de collage.

De manière surprenante, la demanderesse a aussi démontré que cette combinaison est un meilleur adjuvant de collage que les adjuvants conventionnels. Il est ainsi constaté que la combinaison selon l'invention permet d'augmenter de plus de 30% les performances de collage, contre 6 et 18% avec le borax et l'aluminate de sodium respectivement (Exemple 4, Tableau 2). Ces résultats surprenants conduisent à une remise en cause manifeste du caractère jusqu'alors indispensable du borax ou de substituants du borax pour obtenir de bonnes performances de collage.

Dans cette application, les amidons de la combinaison sont sous la forme de granules insolubles et/ou partiellement gonflés ; si bien qu'au lieu de s'ajouter à la composition adhésive, ils viennent en remplacement d'une partie de l'amidon de la partie secondaire habituellement utilisé par le cartonnier. La combinaison fait ainsi partie intégrante de la partie secondaire et l'on comprend facilement l'intérêt économique d'une telle solution.

Ainsi, l'invention a pour premier objet l'utilisation d'une combinaison amidon de légumineuse / amidon de tubercule, pour diminuer et/ou supprimer la teneur en composés porteurs de bore d'une composition adhésive et/ou comme adjuvant de collage dans une composition adhésive pour carton ondulé et/ou pour préparer une composition adhésive exempte de composés porteurs de bore.

L'invention a également pour objet une composition adhésive, comprenant la combinaison selon l'invention, de l'eau et présentant une teneur en composés porteurs de bore inférieure ou égale à 0,6% en poids, par rapport au poids total d'amidon de ladite composition adhésive .

L'invention a également pour objet un procédé de fabrication d'une composition adhésive, comprenant une étape de mélange de la combinaison selon l'invention avec de l'eau et éventuellement des composés porteurs de bore, en une quantité inférieure ou égale à 0,6% en poids, par rapport au poids total d'amidon de ladite composition adhésive.

L'invention a également pour objet un carton ondulé comprenant au moins une cannelure et au moins une couverture, caractérisé en ce que les joints de colle de ladite cannelure sur la couverture comprennent une combinaison selon l'invention, de préférence exempte d'atomes de bore, en particulier de composés porteurs de bore.

On entend par « composition adhésive» au sens de la présente invention, une composition comprenant de l'eau et de l'amidon. L'amidon peut être sous forme de deux parties :
- une partie d'amidon(s) solubilisé(s) et / ou gonflé(s), dite « support » ou « partie primaire »,
- et une partie d'amidon(s) non solubilisé(s) et / ou seulement hydraté(s), c'est-à-dire se trouvant à l'état de granules insolubles et / ou de granules au moins partiellement gonflés, aussi appelée « partie secondaire ».

Il s'agit en particulier de compositions aqueuses, en particulier destinées à l'assemblage du carton ondulé.

Suivant le procédé employé pour la fabrication de la composition adhésive, il se peut dans certains cas que la composition adhésive soit uniquement constituée de granules hydratés, comme c'est le cas par exemple des compositions adhésives fabriquées selon le procédé dit « NO-CARRIER ». On considérera, dans ce cas, que la composition adhésive comprend effectivement une partie secondaire, bien qu'elle soit dépourvue de partie primaire.

La composition adhésive peut également se trouver sous la forme d'un prêt-à-l'emploi, c'est-à-dire sous la forme d'une poudre à laquelle il suffit d'ajouter de l'eau pour être apte à être utilisée dans l'assemblage du carton ondulé.

On entend par « adjuvant de collage », au sens de la présente invention, un produit visant à augmenter les performances de collage d'une composition adhésive pour carton ondulé. Un adjuvant de collage permet en particulier dans la présente invention d'obtenir les mêmes performances de collage que le borax poudre utilisé à une teneur de 1,5% en poids sec par rapport au poids sec d'amidon total de la composition adhésive. Ces performances de collage sont en particulier évaluées selon le test tel que défini dans l'Exemple 4.

On entend par « combinaison amidon de légumineuse / amidon de tubercule » au sens de la présente invention, l'association constituée par de l'amidon d'au moins une légumineuse avec de l'amidon d'au moins un tubercule. Lorsque la composition adhésive comporte une partie primaire et une partie secondaire, la combinaison selon l'invention peut être présente en partie primaire ou en partie secondaire, de préférence en partie secondaire, plus préférentiellement à la fois en partie primaire et en partie secondaire.

On entend par « amidon de légumineuse » ou « amidon de tubercule » au sens de la présente invention, respectivement : les amidons extraits, c'est-à-dire isolés, de légumineuses et les amidons extraits, c'est-à-dire isolés, de tubercules, par toute technique adaptée et bien connue de l'homme du métier.

L 'amidon de légumineuse de la combinaison selon l'invention est un amidon de pois, préférentiellement de pois lisse.

L 'amidon de tubercule de la combinaison selon l'invention est une fécule de pomme de terre.

La combinaison selon l'invention est une combinaison amidon de pois / fécule de pomme de terre.

Lorsque l'amidon de légumineuse est un amidon de pois, l'amidon de pois a généralement une pureté élevée, c'est-à-dire :
- une teneur en amidon supérieure à 90% en poids, en particulier supérieure à 95%, en particulier supérieure à 98%,
- une teneur inférieure à 1% de matières colloïdales et de résidus fibreux,
- une teneur en protéine inférieure à 1%, en particulier inférieure à 0,5%, en particulier comprise entre 0,1 et 0,35%,
ces pourcentages étant exprimés en poids sur la matière sèche.

Il est entendu que, dans la présente description, l'expression "compris entre" doit s'entendre comme désignant une plage de valeurs incluant les bornes citées.

Lorsque l'amidon de légumineuse est un amidon de pois, l'amidon de pois a avantageusement une teneur en amylose comprise entre 15% et 60%, en particulier entre 20% et 55%, en particulier entre 30% et 40% en poids sec, par rapport au poids sec de l'amidon total.

Les amidons de légumineuse et de tubercule sont en particulier sous forme native, mais peuvent également être sous forme modifiée. Un exemple d'amidon de légumineuse modifié est un amidon de pois réticulé, en particulier par le trimétaphosphate de sodium, ou encore par l'epichlorhydrine ou les dérivés formolés, notamment les résines urée-formol et mélanine-formol.

Avantageusement, le ratio en poids amidon de légumineuse / amidon de tubercule de la combinaison selon l'invention est compris entre 5/95 et 95/5, préférentiellement entre 20/80 et 90/10, encore plus préférentiellement entre 25/75 et 80/20, encore préférentiellement entre 30/70 et 80/20 voire entre 60/40 et 80/20.

Lorsqu'une composition adhésive comprend une combinaison selon l'invention, il est même possible d'obtenir des performances de collages meilleures comparativement à la même composition comportant du borax. Comme montré dans l'Exemple 2, ceci est possible grâce au choix judicieux du ratio en poids amidon de légumineuse / amidon de tubercule, qui est alors compris entre 40/60 et 75/25. Les meilleurs résultats sont obtenus pour un ratio proche de 70/30, typiquement supérieur à 65/35 et inférieur à 75/25.

D'excellents résultats ont également été obtenus par la Demanderesse avec un ratio d'environ 50/50, typiquement compris entre 45/55 et 55/45, si bien que dans certains cas, par exemple pour des raisons d'approvisionnement, il pourra être préférable de choisir un tel ratio.

Comme indiqué précédemment, la présente invention a notamment pour objet l'utilisation d'une combinaison amidon de légumineuse / amidon de tubercule selon l'invention pour diminuer la teneur en composés porteurs de bore dans une composition adhésive.

On entend, au sens de la présente invention, par « diminuer la teneur en composés porteurs de bore » le fait de diminuer la teneur en composés porteurs de bore dans une composition adhésive, à une teneur inférieure à 0,6 % en poids par rapport au poids total d'amidon de la composition adhésive.

Préférentiellement, la combinaison selon l'invention est utilisée pour diminuer la teneur en composés porteurs de bore dans une composition adhésive, à une teneur inférieure à 0,50% en poids, préférentiellement inférieure à 0,40% en poids, préférentiellement inférieure à 0,30% en poids, préférentiellement inférieure à 0,20% en poids, préférentiellement inférieure à 0,10% en poids, préférentiellement inférieure à 0,05% en poids, préférentiellement inférieure à 0,01% en poids, par rapport au poids total d'amidon de ladite composition adhésive. De façon tout à fait privilégiée et avantageuse, la combinaison selon l'invention est utilisée pour préparer une composition adhésive ne comprenant pas de composés porteurs de bore. On entend par « composés porteurs de bore », au sens de la présente invention, les composés contenant au moins un atome de bore. Cette définition comprend les borates, et/ou leurs dérivés.

On entend par « borates », au sens de la présente invention, les oxo-anions contenant du bore, comme l'ion borate BO₃³⁻ ou BO₄⁴⁻, éventuellement sous la forme d'ions polymériques comme par exemple le diborate, le triborate, le tétraborate. Les fonctions anioniques peuvent, indépendamment les unes des autres, se trouver sous forme salifiée à l'aide de sels, par exemple des sels de sodium, de calcium, de potassium, de zinc, ou sous forme acide, c'est-à-dire liées à un atome d'hydrogène. Des exemples de composés porteurs de bore bien connus de l'homme du métier sont le tétraborate de sodium décahydraté (autrement appelé « borax »), et l'acide borique. D'autres exemples de borates sont le borax pentahydraté, le pentaborate de sodium décahydraté, le métaborate de sodium octahydraté, le tétraborate de potassium tétrahydraté, le pentaborate de potassium octahydraté, et leurs mélanges. On entend par « dérivés de borate» au sens de la présente invention, les esters ou polyesters de borate, en particulier les esters de borate de formule B(OR)₃, dans laquelle R est un résidu organique. Des exemples de dérivés de borate sont les borates de poly(alkylène glycol), et le triméthyl borate.

La présente invention a également pour objet une composition adhésive caractérisée en ce qu'elle comporte au moins une combinaison amidon de pois / fécule de pomme de terre selon l'invention, de l'eau, et en ce qu'elle présente une teneur en composés porteurs de bore inférieure à 0,01%. Très avantageusement, la composition adhésive selon l'invention est caractérisée en ce qu'elle est exempte de composés porteurs de bore.

Lorsque la composition adhésive selon l'invention comprend une partie primaire et une partie secondaire, une combinaison selon l'invention pourra être comprise dans la partie primaire et/ou dans la partie secondaire de la composition adhésive selon l'invention.

Dans un mode de réalisation de l'invention, la combinaison selon l'invention est au moins comprise dans la partie secondaire, préférentiellement à une teneur supérieure à 80% en poids par rapport au poids total d'amidon de la partie secondaire, préférentiellement supérieure à 90%, et en particulier 100%, c'est-à-dire que dans ce cas, la partie secondaire de la composition adhésive selon l'invention ne comprend pas d'autres amidons que ceux de ladite combinaison.

Dans une variante particulièrement avantageuse, la partie primaire comprend également une combinaison selon l'invention, préférentiellement identique à la combinaison de la partie secondaire, préférentiellement à une teneur supérieure à 80% en poids par rapport au poids total d'amidon de la partie primaire, préférentiellement supérieure à 90%, en particulier 100%. Dans ce dernier cas, la partie primaire de la composition adhésive selon l'invention ne comprend pas d'autres amidons que ceux de ladite combinaison.

On entend par « combinaisons identiques » au sens de la présente invention, des combinaisons selon l'invention utilisant des amidons de légumineuse et de tubercule de même nature, et présentant le même ratio en poids amidon de légumineuse / amidon de tubercule.

La composition adhésive selon l'invention comporte une combinaison de amidon de pois / fécule de pomme de terre, dans laquelle préférentiellement le ratio en poids amidon de pois / fécule de pomme de terre est proche d'environ 70/30, typiquement supérieur à 65/35 et inférieur à 75/25.

De manière générale, cette composition adhésive selon l'invention peut comprendre en plus de la combinaison selon l'invention, tout amidon connu de l'homme du métier, notamment pour des applications dans l'assemblage du carton ondulé. Il pourra s'agir par exemple d'un amidon de céréale, notamment de maïs et/ou de blé, natif ou modifié.

Dans une second mode de réalisation de l'invention, la composition adhésive pour carton ondulé selon l'invention comprend une partie secondaire constituée :
- de 5 à 50% en poids sec d'une combinaison amidon de pois / fécule de pomme de terre, notamment telle que définie avant, plus préférentiellement entre 10 et 30%, mieux, entre 15 et 25%, en particulier proche d'environ 20% ;
- le reste de la masse sèche de ladite partie secondaire étant constitué par un ou plusieurs autre(s) amidons(s).

On entend ici par « autre amidon », un amidon ayant une origine botanique différente, c'est-à-dire un amidon qui n'est pas extrait du pois ou de la pomme de terre. Il pourra s'agir notamment d'un amidon de céréale par exemple de maïs, de blé, de riz, d'un amidon de légumineuse autre que le pois, par exemple de lentille, de luzerne, de trèfle, d'un amidon de tubercule autre que la fécule de pomme de terre, par exemple d'une fécule de manioc ou de tapioca.

Avantageusement dans cette composition, l'amidon de la partie primaire, et l'amidon de la partie secondaire autre que la combinaison selon l'invention est choisi parmi un amidon de blé, un amidon de maïs, ou l'un de leurs mélanges. On parlera alors de compositions adhésives « base blé », « base maïs » ou base « blé/maïs » respectivement. On utilisera préférentiellement des compositions adhésives base maïs.

La composition adhésive selon l'invention présente avantageusement une teneur en matière sèche supérieure à 20% en poids, préférentiellement comprise entre 20 et 35% en poids.

Avantageusement, la composition adhésive selon l'invention, comporte un agent alcalin, en particulier de la soude caustique et/ou de la potasse, à une teneur préférentiellement comprise entre 0,1 et 5% en poids par rapport au poids total d'amidon de ladite composition adhésive, préférentiellement entre 0,5 et 1,5%.

En outre, la composition adhésive selon l'invention peut comprendre des additifs conventionnels, en particulier des additifs d'intérêt pour une application dans l'assemblage du carton ondulé. De tels ingrédients peuvent être :
- des bactéricides ;
- des anti-mousses ;
- des agents de résistance à l'humidité ou à l'eau, notamment choisis parmi les résines formolées ou non, par exemple une résine de type urée-formol, cétone-formol telle que celle commercialisée par la Demanderesse sous le nom de ROQUETTE^{®} Résine RH 3678, résorcine-formol ou phénol-formol, des agents de résistance à l'eau non synthétiques et non formolés, notamment un agent chimique choisi parmi les sulfates, notamment de zinc, d'alumine ou de cuivre, les composés porteurs de zirconium ou le phosphate de diammonium ;
- des agents permettant de prévenir et/ou de lutter contre la formation de tartre et/ou la corrosion au niveau des installations, tels que le gluconate de sodium ;
- des agents plastifiants comme par exemple le nitrate de sodium, l'urée, le dicyandiamide, la glycérine, le sorbitol,
- des agents stabilisants comme par exemple des corps gras tels que les composés du type stéarate ;
- des agents retardateurs de gonflement, par exemple le sulfate de sodium, ou le citrate de sodium ;
- des agents fluidifiants de poudres amylacées, par exemple la silice colloïdale ;
- des adjuvants autres que les composés porteurs de bore, en particulier l'aluminate de sodium ou les tannins, par exemple des produits commerciaux tels que le Collatan WP^{®} (Unitan), C^{∗}RheM^{®} (Cargill), Acramyl^{®} (AQSA) ;
- ou l'un de leurs mélanges.

Dans un mode de réalisation particulièrement avantageux, la composition adhésive selon l'invention est constituée :
- d'au moins une combinaison amidon de pois / fécule de pomme de terre,
- d'eau,
- d'un agent alcalin, en particulier de la soude caustique et/ou de la potasse, à une teneur préférentiellement comprise entre 0,1 et 5% en poids par rapport au poids total d'amidon de ladite composition adhésive, préférentiellement entre 0,5 et 1,5%,
- éventuellement d'additifs choisis parmi :
   ∘ des bactéricides ;
   ∘ des anti-mousses ;
   ∘ des agents de résistance à l'humidité ou à l'eau, notamment choisis parmi les résines formolées ou non, par exemple une résine de type urée-formol, cétone-formol telle que celle commercialisée par la Demanderesse sous le nom de ROQUETTE^{®} Résine RH 3678, résorcine-formol ou phénol-formol, des agents de résistance à l'eau non synthétiques et non formolés, notamment un agent chimique choisi parmi les sulfates, notamment de zinc, d'alumine ou de cuivre, les composés porteurs de zirconium ou le phosphate de diammonium ;
   o des agents permettant de prévenir et/ou de lutter contre la formation de tartre et/ou la corrosion au niveau des installations, tels que le gluconate de sodium ;
   o des agents plastifiants comme par exemple le nitrate de sodium, l'urée, le dicyandiamide, la glycérine, le sorbitol,
   o des agents stabilisants comme par exemple des corps gras tels que les composés du type stéarate ;
   o des agents retardateurs de gonflement, par exemple le sulfate de sodium, ou le citrate de sodium ;
   o des agents fluidifiants de poudres amylacées, par exemple la silice colloïdale ;
   o des adjuvants autres que les composés porteurs de bore, en particulier l'aluminate de sodium ou les tannins, par exemple des produits commerciaux tels que le Collatan WP^{®} (Unitan), C^{∗}RheM^{®} (Cargill), Acramyl^{®} (AQSA) ;
   ∘ ou l'un de leurs mélanges.
- éventuellement de composés porteurs de bore à une teneur inférieure à 0,01%.

Préférentiellement, ladite composition adhésive ne comprend pas de composés porteurs de bore.

Préférentiellement, ladite composition adhésive ne comprend pas non plus d'adjuvants autres que les composés porteurs de bore, tels que l'aluminate de sodium ou les tannins.

L'invention a également pour objet un procédé de fabrication d'une composition adhésive, notamment pour carton ondulé, caractérisé en ce qu'il comprend une étape de mélange d'au moins une combinaison amidon de légumineuse / amidon de tubercule selon l'invention, d'eau, et éventuellement de composés porteurs de bore en quantité inférieure à 0,01%.,. De façon particulièrement avantageuse, le procédé est caractérisé par le fait qu'il ne met pas en œuvre de composés porteurs de bore.

Ledit mélange peut être réalisé par tout moyen de mélange bien connu de l'homme du métier.

Le procédé selon l'invention est avantageusement réalisé selon le procédé dit « STEIN-HALL » (brevet français FR 813.389), mais pourra également l'être selon le procédé dit « MINOCAR » (brevet européen EP 0 038 627), le procédé PRISTIM^{®} (brevet européen EP 0 229 741, au nom de la Demanderesse), ou le procédé dit « NO-CARRIER » (brevet américain US 3,355,307), à la différence bien sûr que la quantité de composés porteurs de bore mise en œuvre est telle que définie précédemment.

Dans le procédé selon l'invention, la combinaison selon l'invention peut être apportée par introduction séparée de l'amidon de légumineuse et de l'amidon de tubercule, ou peut être apportée sous la forme d'un mélange.

Pour ce dernier cas, les amidons de légumineuse et de tubercule peuvent être mélangés par tout moyen de mélange adapté et bien connu de l'homme du métier, par exemple à l'aide de mélangeurs de poudre au fonctionnement continu ou discontinu, ou en phase lait.

En outre, dans le procédé précité, la combinaison selon l'invention est alternativement apportée dans la partie secondaire de la composition adhésive, à raison de 5 à 50% du poids sec de ladite partie secondaire.

La présente invention a également pour objet un carton ondulé comprenant au moins une cannelure et au moins une couverture, caractérisé en ce que les joints de colle de ladite cannelure sur la couverture comprennent une combinaison amidon de légumineuse / amidon de tubercule selon l'invention, de préférence exempte d'atomes de bore, c'est-à-dire de composés porteurs de bore.

Ce carton ondulé peut être obtenu par assemblage d'au moins un papier cannelé avec au moins un papier de couverture, au moyen d'une composition selon l'invention distribuée sur les sommets des cannelures dudit papier cannelé, et d'une étape postérieure de séchage desdits papier cannelé et papier de couverture ainsi assemblés.

Lesdits joints de colle pourront en outre contenir d'autres amidons que ceux de la combinaison selon l'invention, notamment tout amidon connu de l'homme du métier, notamment pour des applications dans l'assemblage du carton ondulé. Il pourra s'agir par exemple d'un amidon de céréale tel qu'un amidon de maïs, de blé, de riz, ou de l'un de leurs mélanges.

L'invention a également pour objet un carton ondulé pouvant être obtenu par assemblage d'au moins un papier cannelé avec au moins un papier de couverture, au moyen d'une composition selon l'invention distribuée sur les sommets des cannelures dudit papier cannelé, et d'une étape postérieure de séchage desdits papier cannelé et papier de couverture ainsi assemblés.

Les exemples ci-après font partie intégrante de la présente invention et servent à l'illustrer sans néanmoins en constituer une limitation.

### EXEMPLES

Examples et exemples comparatifs **1 -** Une composition adhésive comprenant une combinaison amidon de pois / fécule de pomme de terre selon l'invention présentant un ratio en poids amidon de pois / fécule de pomme de terre égal à 70/30 est réalisée selon le procédé « STEIN-HALL ».

Les paramètres utiles pour la réalisation de cette composition sont présentés dans le tableau suivant :

| | |
|---|---|
| Eau à 32°C | 600 g |
| Amidon primaire (Combinaison amidon de pois / fécule de pomme de terre (ratio 70/30)) | 135 g |
| Soude / Eau | 7,5 g / 30 g |
| Agitation | 11 minutes à 1750 tr/min - broche défloculeuse Rayneri |
| Eau à 17°C | 1650 g |
| Amidon secondaire (Combinaison amidon de pois / fécule de pomme de terre (ratio 70/30)) | 615 g |
| Agitation | 12 minutes à 1750 tr/min - broche défloculeuse Rayneri |
| Caractéristiques à TO | Viscosité Lory (L) : 24 |
| | Viscosité Brookfield (B) : 860 |
| | B/L : 36 |

L'amidon de pois présente une richesse en amidon supérieure à 95%, une teneur en protéines de 0,30% et en substances colloïdales inférieure à 1%.

La richesse en amylose dudit amidon est de 35,7%.

La composition ainsi réalisée est utilisée pour l'assemblage d'un carton ondulé double-face, et les performances de collage évaluées selon la méthode telle que décrite dans l'Exemple 2.

Le collage du carton ondulé se produit extrêmement rapidement et de façon extrêmement satisfaisante.

### Examples et exemples comparatifs

### 2 - EVALUATION DES PERFORMANCES DE COLLAGE

Différentes compositions adhésives à 25% de matière sèche sont réalisées selon le procédé STEIN-HALL.

Ces compositions comprennent ou non une combinaison selon l'invention.

Différentes teneurs en borax sont testées. Lorsque le borax est présent, il est introduit dans les compositions adhésives en deux parties. Par exemple pour les essais réalisés à 1,12% de borax en poids par rapport au poids total d'amidon, 4,4g, puis 4g de borax en poudre ont été introduits avant et après l'ajout de l'amidon secondaire respectivement.

Les mêmes amidons constituent la partie primaire la partie secondaire, i.e. des amidons de même nature, et présentant les mêmes ratios en poids lorsqu'ils sont en combinaison. Les performances de collage sont évaluées à l'aide d'un appareil STROHLEIN, selon un procédé mis au point par la Demanderesse, afin de simuler un collage double-face.

### Principe

Une quantité de colle connue est déposée sur une éprouvette de carton simple-face. Cette éprouvette est immobilisée dans un sabot puis mise en contact avec un papier couverture. Une source de chaleur, à température contrôlée, va simuler la température des tables chauffantes avant le déclenchement de la mesure de l'énergie de séparation de la simple-face et de la couverture par libération du sabot.

La source de chaleur est un fer électrique à semelle non perforée.

Pour simuler la production de cartons double-face, double-double ou triple cannelure, la mesure est effectuée à différentes températures.

### Mode opératoire

▪ Mettre la colle en circulation sur l'encolleuse. Régler la température proche de la température finale de la préparation de la colle (35°C) à l'aide du bain marie.
▪ Mettre le fer en chauffe pour atteindre la température voulue (75°C - 95°C - 110°C ± 0.2°C).
▪ Encoller une éprouvette simple face pour avoir une dépose de 0.23g ± 0.01g (soit ≈ 35 g de colle au m²).
▪ Régler le temps de chauffe et le temps de mûrissement.
▪ Fixer une éprouvette de couverture côté feutre vers le bas sur le socle du Strohlein
▪ Fixer dans le sabot l'éprouvette encollée face encollée vers le haut.
▪ Rabattre la partie droite de la couverture.
▪ Poser délicatement le fer sur l'ensemble tout en appuyant sur le bouton DEPART pour déclencher la minuterie du temps de chauffe.
▪ Retirer le fer à la fin du temps de chauffe. Le sabot est alors libéré, l'arrachement se fait. La déviation maximale du pendule indique la force d'arrachement. Le résultat est exprimé en mJ.

### Détermination du CTO et du CT5

▪ Tracer la courbe : énergie nécessaire à l'arrachement en fonction du temps de chauffe.
▪ Le CTO est le temps nécessaire pour obtenir une énergie d'arrachement de 245 mJ. valeur où apparait une amorce de défibrage du papier. Au-dessus de cette valeur on teste à la fois le joint de colle et le papier.
▪ Le CT5 est le temps nécessaire pour obtenir une énergie d'arrachement de 245 mJ après 5 secondes de mûrissement.

Les valeurs de CTO et CT5 ainsi obtenues ont une importante valeur informative, la pertinence de ce mode opératoire ayant été confirmée par de multiples essais industriels.

### Résultats :

Les résultats sont présentés dans le Tableau 1. La première colonne donne la nature des amidons qui composent les compositions adhésives testées ainsi que les ratios des amidons lorsqu'ils sont en association (par exemple « Pois / Fécule (25/75) » doit s'entendre comme une composition adhésive dont les amidons de la partie primaire et secondaire sont un mélange amidon de pois / fécule de pomme de terre présentant un ratio en poids égal à 25/75). La deuxième colonne donne leur teneur en borax en poids par rapport au poids total d'amidon de la composition adhésive. La troisième colonne présente les performances de collage, en particulier le temps nécessaire pour obtenir une énergie d'arrachement de 245 mJ après 5 secondes de mûrissement à 75°C (CT5 à 75°C). La quatrième colonne donne la différence de valeurs de CT5 à 75°C entre une composition contenant du borax et cette même composition ne contenant pas de borax (Δ CT5 à 75°C).

**Tableau 1 : Evaluation des performances de collage de différentes compositions adhésives, avec ou sans borax.**

| Nature des amidons (ratio en poids) | Teneur en Borax (%) | CT5 à 75°C (secondes) | Δ CT5 à 75°C (secondes) |
|---|---|---|---|
| Pois / Fécule (25/75) | 1,12 | 17 | |
| Pois / Fécule (25/75) | - | 16,5 | +0,5 |
| Pois seul | 1,12 | 16 | |
| Pois seul | - | 27 | -11 |
| Maïs seul | 1,12 | 40,6 | |
| Maïs seul | - | 45 | -4,4 |
| Pois / Fécule (50/50) | 1,12 | 21,8 | |
| Pois / Fécule (50/50) | - | 15,5 | +6,3 |
| Maïs/Fécule (50/50) | 1.51 | 15 | |
| Maïs/Fécule (50/50) | - | 20 | -5 |
| Pois / Maïs (50/50) | 1,12 | 20,6 | |
| Pois / Maïs (50/50) | - | 24,1 | -3,5 |
| Pois / Fécule (70/30) | 1,12 | 23,4 | |
| Pois / Fécule (70/30) | - | 14,7 | +8,7 |
| Pois / Maïs (70/30) | 1,12 | 16,9 | |
| Pois / Maïs (70/30) | - | 19,8 | -2,9 |
| Maïs / Fécule (75/25) | 1,51 | 20,8 | |
| Maïs / Fécule (75/25) | - | 24 | -3,2 |
| Pois / Fécule (75/25) | 1,12 | 19,2 | |
| Pois / Fécule (75/25) | - | 18,9 | +0,3 |
| Pois / Fécule (80/20) | 1,12 | 21,5 | |
| Pois / Fécule (80/20) | - | 19,8 | +1,7 |

Lorsque l'on ôte le borax d'une composition adhésive comprenant une combinaison selon l'invention, en particulier une combinaison amidon de pois / fécule de pomme de terre, on observe des valeurs de CT5 à 75°C inférieures ou égales, comparativement à la même composition contenant du borax.

Lorsque l'on ôte le borax d'une composition adhésive ne comprenant pas une combinaison selon l'invention, on observe des valeurs de CT5 à 75°C supérieures, comparativement à la même composition contenant du borax.

Ainsi, pour une composition adhésive comprenant une combinaison selon l'invention, on obtient des valeurs de Δ CT5 à 75°C positives, alors que l'on obtient des valeurs de Δ CT5 à 75°C négatives pour des compositions ne comprenant pas une combinaison selon l'invention.

Ainsi, la combinaison selon l'invention, permet de diminuer la teneur en composés porteurs de bore et même de supprimer les composer porteurs de bore d'une composition adhésive, tout en maintenant, voire en améliorant les performances de collage de cette composition.

Pour des compositions adhésives comprenant une combinaison selon l'invention, en particulier une combinaison amidon de pois / fécule de pomme de terre, présentant un ratio compris entre 50/50 et 70/30, on observe des valeurs de CT5 à 75°C inférieures, comparativement à la même composition contenant du borax.

Ainsi, la combinaison selon l'invention, pour un ratio en poids amidon de légumineuse / amidon de tubercule compris entre 50/50 et 70/30 permet de diminuer la teneur en composés porteurs de bore et même de supprimer les composés porteurs de bore d'une composition adhésive, tout en améliorant les performances de collage de cette composition.

Les meilleurs résultats sont obtenus pour une composition adhésive comprenant une combinaison selon l'invention à un ratio de 70/30, pour lequel une diminution exceptionnelle de la valeur des valeurs de CT5 à 75°C est observée. On obtient ainsi une valeur de Δ CT5 à 75°C supérieure à +8.

### EXEMPLE 3 - REALISATION D'UNE COMPOSITION SELON L'INVENTION

Une composition adhésive base maïs comprenant une combinaison amidon de pois / fécule de pomme de terre selon l'invention présentant un ratio en poids sec amidon de pois / fécule de pomme de terre égal à 70/30 est réalisée selon le procédé « STEIN-HALL ».

Les paramètres utiles pour la réalisation de cette composition sont présentés dans le tableau suivant :

| | |
|---|---|
| Eau à 17°C | 1650 g |
| Amidon de maïs^{∗} (partie secondaire) | 480 g |
| **Combinaison selon l'invention** : amidon de pois^{∗∗} + fécule de pomme de terre | **84 g +36 g** |
| Agitation | 12 minutes à 1750 tr/min - broche défloculeuse Rayneri |
| Caractéristiques à T0 | Viscosité Lory (L) : 25 secondes |
| | Viscosité Brookfield (B) : 860 |
| | B/L : 36 |

| | |
|---|---|
| ^{∗} *amidon de maïs natif haute viscosité.* ^{∗∗} *L'amidon de pois présente ici une richesse en amidon supérieure à 95%, une teneur en protéines de 0,30% et en substances colloïdales inférieure à 1%. La richesse en amylose dudit amidon est d'environ 35-36%.* | |

Les performances de collage de cette composition ont ensuite été évaluées et comparées à des compositions comprenant différents types d'adjuvants de collage (Exemple 4 ci-dessous).

### EXEMPLE 4 - EVALUATION DES PERFORMANCES DE COLLAGE

Différentes compositions base maïs à 25% de matières sèches ont été réalisées selon le procédé tel que décrit à l'Exemple 2.

### Résultats :

Les résultats sont présentés dans le Tableau 2. La valeur « CT5 75°C » correspond au temps nécessaire pour obtenir une énergie d'arrachement de 245 mJ après 5 secondes de mûrissement à 75°C.

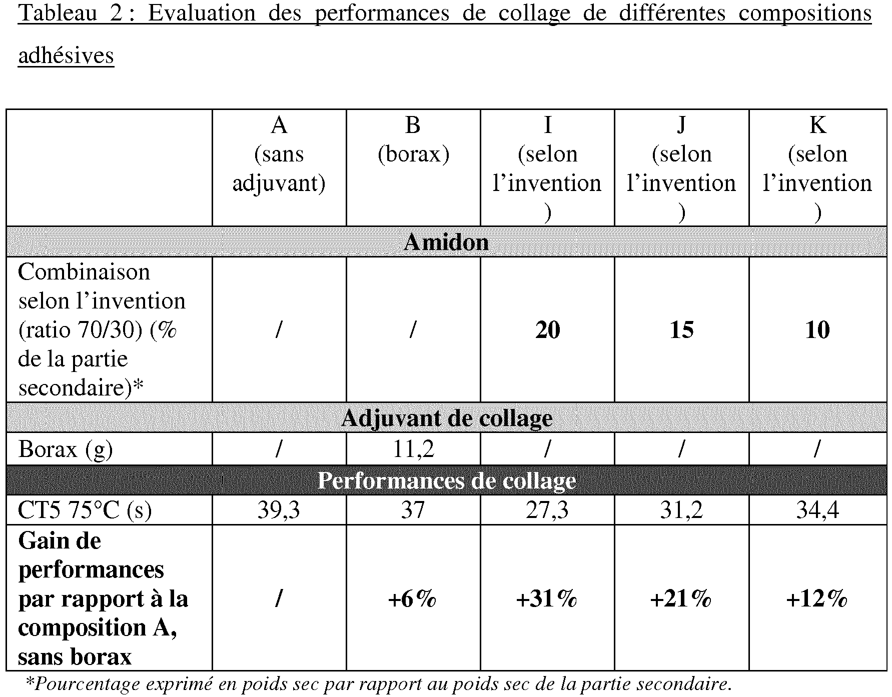

La composition I selon l'invention correspond à celle décrite dans l'Exemple 3.

Le borax permet d'augmenter les performances de collage de 6%comparativement à une composition adhésive non adjuvantée (composition A).

La composition I selon l'invention, qui comporte une combinaison amidon de pois / fécule de pomme de terre comme adjuvant de collage, permet d'augmenter de 31% les performances de collage d'une composition base maïs.

La combinaison amidon de pois / fécule de pomme de terre selon l'invention est donc un meilleur adjuvant de collage que le borax et d'aluminate de sodium. l'amidon de pois, d'une part, et la fécule de pomme de terre, d'autre part, s'ils ne sont pas présents simultanément dans la composition adhésive, ne permettent pas d'améliorer les performances de collage de la composition. Un effet de synergie se produit donc lorsqu'ils sont combinés, en particulier avec une composition adhésive base maïs.

Plusieurs compositions selon l'invention ont ensuite été évaluées en fonction de la quantité de la combinaison amidon de pois / fécule de pomme de terre introduite en partie secondaire. Pour ces essais, une combinaison amidon de pois / fécule de pomme de terre présentant un ratio de 70/30 selon l'invention a été utilisée.

## Revendications

1. Utilisation d'une combinaison amidon de légumineuse / amidon de tubercule pour supprimer la teneur en composés porteurs de bore dans une composition adhésive pour carton ondulé, la combinaison amidon de légumineuse / amidon de tubercule étant une combinaison amidon de pois / fécule de pomme de terre.

2. Utilisation selon la revendication 1, dans laquelle l'amidon de légumineuse est un amidon de pois lisse.

3. Utilisation selon l'une quelconque des revendications précédentes, **caractérisée en ce que** le ratio en poids amidon de légumineuse / amidon de tubercule de ladite combinaison est compris entre 5/95 et 95/5, préférentiellement entre 20/80 et 90/10, préférentiellement entre 25/75 et 80/20, préférentiellement entre 30/70 et 80/20, encore préférentiellement entre 40/60 et 75/25, ou **en ce qu'**il est proche d'environ 70/30, typiquement supérieur à 65/35 et inférieur à 75/25, ou proche d'environ 50/50, typiquement compris entre 45/55 et 55/45.

4. Composition adhésive, **caractérisée en ce qu'**elle comporte au moins une combinaison amidon de pois / fécule de pomme de terre, de l'eau, et **en ce qu'**elle est exempte de composés porteurs de bore.

5. Composition adhésive selon la revendication 4, **caractérisée en ce que** le ratio en poids amidon de pois / fécule de pomme de terre de ladite combinaison est compris entre 5/95 et 95/5, préférentiellement entre 20/80 et 90/10, préférentiellement entre 25/75 et 80/20, préférentiellement entre 30/70 et 80/20, encore préférentiellement entre 40/60 et 75/25, ou **en ce qu'**il est proche d'environ 70/30, typiquement supérieur à 65/35 et inférieur à 75/25, ou proche d'environ 50/50, typiquement compris entre 45/55 et 55/45.

6. Composition adhésive selon la revendication 4 ou 5, **caractérisée en ce qu'**elle comporte une partie primaire et une partie secondaire et **en ce que** ladite combinaison est comprise dans la partie primaire et/ou dans la partie secondaire de ladite composition adhésive, préférentiellement au moins dans la partie secondaire, encore préférentiellement à la fois dans la partie primaire et dans la partie secondaire de la composition adhésive.

7. Composition adhésive selon l'une quelconque des revendications 4 à 6, **caractérisée en ce qu'**elle comprend une partie secondaire constituée :
de 5 à 50% en poids sec d'une combinaison amidon de pois / fécule de pomme de terre telle que définie dans l'une quelconque des revendications 1 à 3, plus préférentiellement entre 10 et 30%, mieux, entre 15 et 25%, en particulier proche d'environ 20% ;
le reste de la masse sèche de ladite partie secondaire étant constitué par un ou plusieurs autre(s) amidons(s).

8. Composition adhésive selon l'une quelconque des revendications 4 à 7 **caractérisée en ce qu'**elle présente une teneur en matière sèche supérieure à 20% en poids, préférentiellement comprise entre 20 et 35% en poids.

9. Procédé de fabrication d'une composition adhésive, **caractérisé en ce qu'**il comprend une étape de mélange d'au moins une combinaison amidon de légumineuse / amidon de tubercule telle que définie dans l'une quelconque des revendications 1 à 3, d'eau, et éventuellement de composés porteurs de bore en quantité inférieure à 0,01%, par rapport au poids total d'amidon de ladite composition adhésive.

10. Procédé selon la revendication 9, **caractérisé en ce qu'**il ne met pas en œuvre de composés porteurs de bore.

11. Carton ondulé comprenant au moins une cannelure et au moins une couverture, **caractérisé en ce que** les joints de colle de ladite cannelure sur la couverture comprennent une combinaison amidon de légumineuse / amidon de tubercule telle que définie dans l'une quelconque des revendications 1 à 3, de préférence exempte d'atomes de bore.

## Patentansprüche

1. Verwendung einer Leguminosenstärke/Knollenstärke-Kombination zur Unterdrückung des Gehalts an borhaltigen Verbindungen in einer Klebstoffzusammensetzung für Wellpappe, wobei die Leguminosenstärke/Knollenstärke-Kombination eine Erbsenstärke/Kartoffelstärke-Kombination ist.

2. Verwendung nach Anspruch 1, wobei die Leguminosenstärke eine glatte Erbsenstärke ist.

3. Verwendung nach einem der vorhergehenden Ansprüche, **dadurch gekennzeichnet, dass** das Gewichtsverhältnis Leguminosenstärke/Knollenstärke der genannten Kombination zwischen 5/95 und 95/5, bevorzugt zwischen 20/80 und 90/10, bevorzugt zwischen 25/75 und 80/20, liegt, bevorzugt zwischen 30/70 und 80/20, stärker bevorzugt zwischen 40/60 und 75/25, oder nahe bei etwa 70/30, typischerweise größer als 65/35 und kleiner als 75/25, oder nahe bei etwa 50/50, typischerweise zwischen 45/55 und 55/45.

4. Klebstoffzusammensetzung, **dadurch gekennzeichnet, dass** sie wenigstens eine Erbsenstärke/Kartoffelstärke-Kombination und Wasser enthält und dass sie frei von borhaltigen Verbindungen ist.

5. Klebstoffzusammensetzung nach Anspruch 4, **dadurch gekennzeichnet, dass** das Gewichtsverhältnis Erbsenstärke/Kartoffelstärke dieser Kombination zwischen 5/95 und 95/5, bevorzugt zwischen 20/80 und 90/10, besonders bevorzugt zwischen 25/75 und 80/20, liegt, bevorzugt zwischen 30/70 und 80/20, stärker bevorzugt zwischen 40/60 und 75/25, oder nahe bei etwa 70/30, typischerweise über 65/35 und unter 75/25, oder nahe bei etwa 50/50, typischerweise zwischen 45/55 und 55/45.

6. Klebstoffzusammensetzung nach Anspruch 4 oder 5, **dadurch gekennzeichnet, dass** sie einen primären Teil und einen sekundären Teil umfasst und dass die Kombination im primären Teil und/oder im sekundären Teil der Klebstoffzusammensetzung enthalten ist, bevorzugt wenigstens im sekundären Teil, stärker bevorzugt sowohl im primären Teil als auch im sekundären Teil der Klebstoffzusammensetzung.

7. Klebstoffzusammensetzung nach einem der Ansprüche 4 bis 6, **dadurch gekennzeichnet, dass** sie einen sekundären Teil aufweist, umfassend:
5 bis 50 % des Trockengewichts einer Erbsenstärke/Kartoffelstärke-Kombination, wie in einem der Ansprüche 1 bis 3 definiert, bevorzugt zwischen 10 und 30 %, besser zwischen 15 und 25 %, insbesondere nahe bei etwa 20 %;
wobei der Rest der Trockenmasse des Sekundärteils eine oder mehrere andere Stärken umfasst.

8. Klebstoffzusammensetzung nach einem der Ansprüche 4 bis 7, **dadurch gekennzeichnet, dass** diese einen Trockenmassegehalt von mehr als 20 Gew.-%, bevorzugt zwischen 20 und 35 Gew.-%, aufweist.

9. Verfahren zur Herstellung einer Klebstoffzusammensetzung, **dadurch gekennzeichnet, dass** es einen Schritt des Mischens von wenigstens einer Leguminosenstärke/Knollenstärke-Kombination, wie in einem der Ansprüche 3 definiert, Wasser und gegebenenfalls borhaltigen Verbindungen in einer Menge von weniger als 0,01 %, bezogen auf das Gesamtgewicht der Stärke in der Klebstoffzusammensetzung, umfasst.

10. Verfahren nach Anspruch 9, **dadurch gekennzeichnet, dass** keine borhaltigen Verbindungen verwendet werden.

11. Wellpappe mit wenigstens einer Welle und wenigstens einem Deckblatt, **dadurch gekennzeichnet, dass** die Klebenähte der Welle auf dem Deckblatt eine Leguminosen-/Knollenstärke-Kombination gemäß einem der Ansprüche 1 bis 3 umfassen, die bevorzugt frei von Boratomen ist.

## Claims

1. A use of a leguminous starch / tuber starch combination to suppress the boron-bearing compound content in an adhesive composition for corrugated cardboard, the leguminous starch / tuber starch combination being a pea starch / potato starch combination.

2. The use according to claim 1, wherein the leguminous starch is a smooth pea starch.

3. The use according to any one of the preceding claims, **characterised in that** the leguminous starch / tuber starch weight ratio of said combination is comprised between 5/95 and 95/5, preferably between 20/80 and 90/10, preferably between 25/75 and 80/20, preferably between 30/70 and 80/20, more preferably between 40/60 and 75/25, or **in that** it is close to about 70/30, typically greater than 65/35 and less than 75/25, or close to about 50/50, typically comprised between 45/55 and 55/45.

4. An adhesive composition, **characterised in that** it includes at least one pea starch / potato starch combination, water, and **in that** it is free of boron-bearing compounds.

5. The adhesive composition according to claim 4, **characterised in that** the pea starch / potato starch weight ratio of said combination is comprised between 5/95 and 95/5, preferably between 20/80 and 90/10, preferably between 25/75 and 80/20, preferably between 30/70 and 80/20, more preferably between 40/60 and 75/25, or **in that** it is close to about 70/30, typically greater than 65/35 and less than 75/25, or close to about 50/50, typically comprised between 45/55 and 55/45.

6. The adhesive composition according to claim 4 or 5, **characterised in that** it includes a primary portion and a secondary portion and **in that** said combination is comprised in the primary portion and/or in the secondary portion of said adhesive composition, preferably at least in the secondary portion, more preferably both in the primary portion and in the secondary portion of the adhesive composition.

7. The adhesive composition according to any one of claims 4 to 6, **characterised in that** it comprises a secondary portion consisting of:
from 5 to 50% by dry weight of a pea starch / potato starch combination as defined in any one of claims 1 to 3, more preferably between 10 and 30%, most preferably between 15 and 25%, in particular close to about 20%;
the remainder of the dry mass of said secondary portion being constituted by one or more other starch(es).

8. The adhesive composition according to any one of claims 4 to 7, **characterised in that** it has a dry matter content which is greater than 20% by weight, preferably comprised between 20 and 35% by weight.

9. A method for manufacturing an adhesive composition, **characterised in that** it comprises a step of mixing at least one leguminous starch / tuber starch combination as defined in any one of claims 1 to 3, water, and optionally boron-bearing compounds in an amount of less than 0.01%, relative to the total weight of starch of said adhesive composition.

10. The method according to claim 9, **characterised in that** it does not implement boron-bearing compounds.

11. A corrugated cardboard comprising at least one flute and at least one cover, **characterised in that** the glue joints of said flute on the cover comprise a leguminous starch / tuber starch combination as defined in any one of claims 1 to 3, preferably free of boron atoms.
